# EUROPEAN PATENT APPLICATION

(11) **EP 4 715 599 A1**
(43) Date of publication of application: **25.03.2026**
(21) Application number: 25788869.3
(22) Date of filing: 17.04.2025
(51) Int. Cl.: G06F 11/22

(54) **NEURAL NETWORK PROCESSOR AND TEST METHOD THEREFOR, AND DEVICE AND STORAGE MEDIUM**

(30) Priority: 26.04.2024 CN 202410516837
(71) Applicant: Beijing Horizon Information Technology Co., Ltd., Beijing 100094 (CN)
(72) Inventor: CHEN, Jiaqi, Beijing 100094 (CN)
(74) Representative: Patentanwälte Magenbauer & Kollegen Partnerschaft mbB
(86) International application number: PCT/CN2025/089675
(87) International publication number: WO 2025/223303

(57) **Abstract**

Disclosed are a neural network processor and a testing method therefor, a device, and a storage medium, relating to the technical field of functional safety. The method includes: determining first configuration information corresponding to a first calculation module in the neural network processor; determining first test data based on the first configuration information; processing the first test data by the first calculation module, to obtain first test response data; processing the first test response data by a second calculation module, to obtain second test response data; and determining a test result based on the first test data and the second test response data. In technical solutions of this disclosure, because algorithms corresponding to the first calculation module and the second calculation module are inverse, the test result of the first calculation module and/or the second calculation module can be accurately determined based on the first test data and the second test response data, thereby implementing testing for different calculation modules. In this way, an applicable scope of testing is expanded, and testing efficiency is improved.

## Description

This disclosure claims the priority to the Chinese patent application No. 202410516837.5, filed on April 26, 2024 and entitled "NEURAL NETWORK PROCESSOR AND TESTING METHOD THEREFOR, DEVICE, AND STORAGE MEDIUM", which is incorporated herein by references in its entirety.

### FIELD OF THE INVENTION

This disclosure relates to the technical field of functional safety (FuSa), and in particular, to a neural network processor and a testing method therefor, a device, and a storage medium.

### BACKGROUND OF THE INVENTION

Currently, in functional safety (FuSa) security protection of a neural network processor, a test vector (TEST PATTERN) scheme has become an important testing manner for FuSa security protection due to small area overhead.

When the TEST PATTERN scheme is used for testing, it is needed to input same test data to a plurality of identical calculation modules simultaneously, and then calculation results obtained by processing the test data by these modules are compared to test the plurality of identical calculation modules. In other words, the TEST PATTERN scheme is only applicable to a plurality of identical calculation modules, while for different calculation modules, the TEST PATTERN scheme cannot be used for FuSa security protection.

### SUMMARY OF THE INVENTION

Generally, when a TEST PATTERN scheme is used for testing, only identical calculation modules can be tested, while for different calculation modules in a neural network processor, the TEST PATTERN scheme cannot be used for FuSa security protection.

To resolve the foregoing technical problem, this disclosure provides a testing method for a neural network processor, including:
determining first configuration information corresponding to a first calculation module in the neural network processor, wherein the first configuration information is used to configure a testing mode for the first calculation module;
determining first test data based on the first configuration information;
processing the first test data by the first calculation module in the neural network processor, to obtain first test response data;
processing the first test response data from the first calculation module by a second calculation module in the neural network processor, to obtain second test response data, wherein an algorithm corresponding to the second calculation module is inverse to that corresponding to the first calculation module; and
determining a test result for the first calculation module and/or the second calculation module based on the first test data and the second test response data.

According to a second aspect of this disclosure, a neural network processor is provided, including:
a first configuration circuit coupled to a test circuit, being configured to receive a test configuration instruction, generate first configuration information corresponding to a first calculation module in response to the test configuration instruction, and send the first configuration information to the test circuit;
the test circuit coupled to the first calculation module and a comparator, being configured to determine first test data based on the first configuration information, and send the first test data to the first calculation module and the comparator;
the first calculation module coupled to a second calculation module, being configured to process the first test data, and send obtained first test response data to the second calculation module;
the second calculation module coupled to the comparator, being configured to process the first test response data and send obtained second test response data to the comparator, wherein an algorithm corresponding to the second calculation module is inverse to that corresponding to the first calculation module; and
the comparator, configured to determine a test result for the first calculation module and/or the second calculation module based on the first test data and the second test response data.

An embodiment of a third aspect of this disclosure provides a computer readable storage medium. The storage medium stores a computer program, and the computer program is used for implementing the testing method for a neural network processor according to the first aspect.

An embodiment in a fourth aspect of this disclosure provides an electronic device, wherein the electronic device includes:
a processor; and
a memory, configured to store processor-executable instructions, wherein
the processor is configured to read the executable instructions from the memory, and execute the instructions to implement the testing method for a neural network processor according to the first aspect.

In the embodiments of this disclosure, because the algorithm corresponding to the first calculation module is inverse to that corresponding to the second calculation module, when the first test response data is obtained by processing the first test data by the first calculation module and the second test response data is obtained by processing the first test response data by the second calculation module, if the first calculation module and the second calculation module are normal, the second test response data output by the second calculation module is consistent with the first test data; and if logic of the first calculation module and/or the second calculation module is abnormal, the second test response data output by the second calculation module is inconsistent with the first test data. Therefore, the test result of the first calculation module and/or the second calculation module can be accurately determined based on the first test data and the second test response data, thereby implementing testing for different calculation modules. In this way, an applicable scope of the TEST PATTERN scheme is expanded, and testing efficiency is improved.

### BRIEF DESCRIPTION OF THE DRAWINGS

FIG. 1 is a schematic diagram of a structure of a neural network processor according to an exemplary embodiment of this disclosure;
FIG. 2 is a schematic diagram of a structure of another neural network processor according to an exemplary embodiment of this disclosure;
FIG. 3 is a schematic diagram of a structure of still another neural network processor according to an exemplary embodiment of this disclosure;
FIG. 4 is a schematic flowchart of a testing method for a neural network processor according to an exemplary embodiment of this disclosure;
FIG. 5 is a schematic flowchart of another testing method for a neural network processor according to an exemplary embodiment of this disclosure;
FIG. 6 is a schematic flowchart of still another testing method for a neural network processor according to an exemplary embodiment of this disclosure;
FIG. 7 is a schematic flowchart of yet another testing method for a neural network processor according to an exemplary embodiment of this disclosure;
FIG. 8 is a schematic flowchart of still yet another testing method for a neural network processor according to an exemplary embodiment of this disclosure;
FIG. 9 is a schematic diagram of a structure of yet another neural network processor according to an exemplary embodiment of this disclosure;
FIG. 10 is a schematic diagram of a structure of still yet another neural network processor according to an exemplary embodiment of this disclosure;
FIG. 11 is a schematic diagram of a structure of a further neural network processor according to an exemplary embodiment of this disclosure; and
FIG. 12 is a schematic diagram of a structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Application overview

Currently, a FuSa mechanism is a key capability in the field of automotive regulations, and has been widely used in neural network processors. Typically, FuSa protection schemes for the neural network processors include a backup module (Dual core) scheme and a TEST PATTERN scheme. A security protection scheme based on the Dual core scheme is applicable to all to-be-protected calculation modules in the neural network processor. However, area overhead is relatively large (an area has doubled as compared to an original area) because it is required to copy the to-be-protected calculation module in the Dual core scheme. The TEST PATTERN scheme is to select a security protection scheme, and is only applicable to a plurality of identical calculation modules in the neural network processor. However, area overhead is relatively small because it is not required to copy the to-be-protected calculation module in the TEST PATTERN scheme. Therefore, the TEST PATTERN scheme has become a preferred scheme among the FuSa protection schemes for the neural network processors.

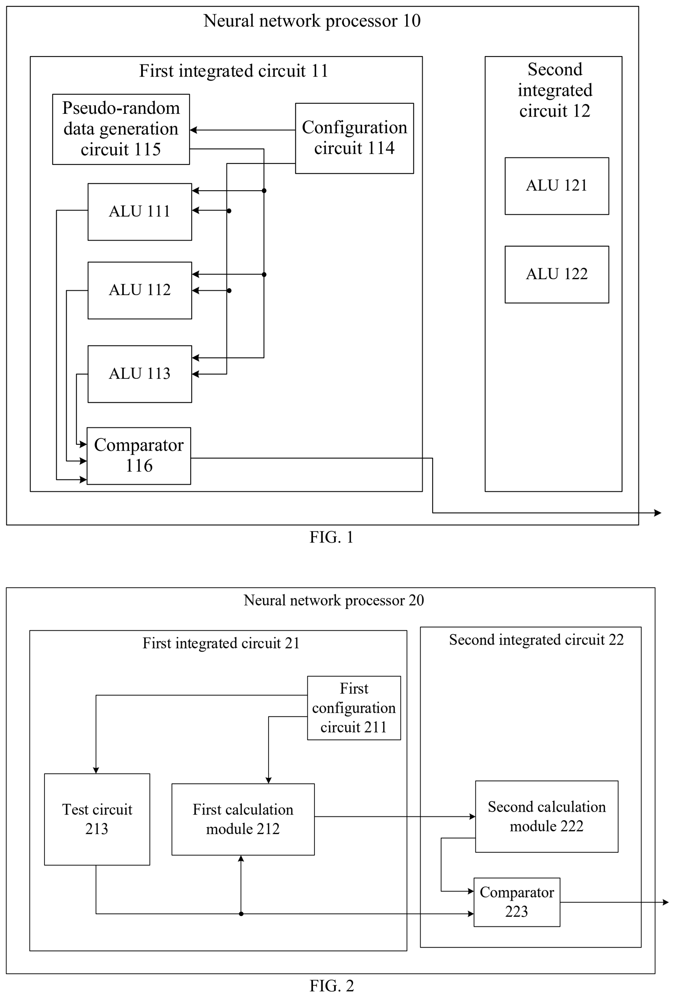

FIG. 1 is a schematic diagram of a structure of a neural network processor to which a TEST PATTERN scheme is applicable according to an embodiment of this disclosure. As shown in FIG. 1, a neural network processor 10 may include a first integrated circuit 11 and a second integrated circuit 12. The first integrated circuit 11 may include three identical ALUs, which respectively are an ALU 111, an ALU 112, and an ALU 113, a configuration circuit 114, a pseudo-random data generation circuit 115, and a comparator 116. The second integrated circuit 12 may include two ALUs that are different from the ALU 111, which respectively are an ALU 121 and an ALU 122.

An algorithm configuration terminal of the configuration circuit 114 is coupled to algorithm configuration terminals of the ALU 111, the ALU 112, and the ALU 113; and a test enable terminal of the configuration circuit 114 is coupled to an enable terminal of the pseudo-random data generation circuit 115. Test data input terminals of the ALU 111, the ALU 112, and the ALU 113 are all coupled to a test data output terminal of the pseudo-random data generation circuit 115. Calculation result output terminals of the ALU 111, the ALU 112, and the ALU 113 are all coupled to a comparison input terminal of the comparator 116. An output terminal of the comparator 116 is used to send a comparison result to an operating system.

An implementation process of the TEST PATTERN scheme is described below with reference to FIG. 1.

As shown in FIG. 1, first, the configuration circuit 114 receives test configuration information, sends enable information in the test configuration information to a test enable terminal of the pseudo-random data generation circuit 115, and sends algorithm information in the test configuration information to the algorithm configuration terminals of the ALU 111, the ALU 112, and the ALU 113.

Subsequently, the pseudo-random data generation circuit 115 generates corresponding test data in response to the enable information, and sends the test data to the test data input terminals of the ALU 111, the ALU 112, and the ALU 113.

Subsequently, the test data input terminals of the ALU 111, the ALU 112, and the ALU 113 respectively receive the test data, calculate the test data according to an algorithm corresponding to the algorithm information to obtain calculation results, and send the calculation results to the comparator 116 through the calculation result output terminals.

Finally, the comparator 116 compares the calculation results to obtain a first comparison result, and sends the first comparison result to the operating system.

In this embodiment of this disclosure, the TEST PATTERN scheme is only applicable for testing the identical ALU 111, ALU 112, and ALU 113, with a relatively small applicable scope of testing. For two different calculation modules (that is, calculation modules that are only instantiated once), the TEST PATTERN scheme cannot be adopted for FuSa security protection.

On the basis of the foregoing technical problem, an embodiment of this disclosure provides a testing method for a neural network processor. First configuration information corresponding to a first calculation module in the neural network processor is determined, so that first test data is determined based on the first configuration information; the first test data is processed by the first calculation module, to obtain first test response data; and the first test response data is processed by a second calculation module, to obtain second test response data. Because an algorithm corresponding to the first calculation module is inverse to that corresponding to the second calculation module, when the first test data is processed sequentially by the first calculation module and the second calculation module, if the first calculation module and the second calculation module are normal, the second test response data output by the second calculation module is consistent with the first test data; and if logic of the first calculation module and/or the second calculation module is incorrect, the second test response data output by the second calculation module is inconsistent with the first test data. Therefore, a test result of the first calculation module and/or the second calculation module can be accurately determined based on the first test data and the second test response data, thereby implementing testing for different calculation modules. In this way, an applicable scope of the TEST PATTERN scheme is expanded, and testing efficiency is improved.

### Exemplary system

FIG. 2 is a schematic diagram of a structure of another neural network processor according to an exemplary embodiment of this disclosure. As shown in FIG. 2, a neural network processor 20 includes a first integrated circuit 21 and a second integrated circuit 22. The first integrated circuit 21 includes a first configuration circuit 211, a first calculation module (ALU) 212, and a test circuit 213. The second integrated circuit 22 includes a second calculation module (ALU) 222 and a comparator 223.

In some embodiments of this disclosure, the comparator 223 may be a dual-channel comparator.

A test enable terminal of the first configuration circuit 211 is coupled to a test enable terminal of the test circuit 213. A data output terminal of the test circuit 213 is coupled to a data input terminal of the first calculation module 212 and a first input terminal of the comparator 223. A data output terminal of the first calculation module 212 is coupled to a data input terminal of the second calculation module 222. A data output terminal of the second calculation module 222 is coupled to a second input terminal of the comparator 223. An output terminal of the comparator 223 is coupled to an output terminal of the neural network processor.

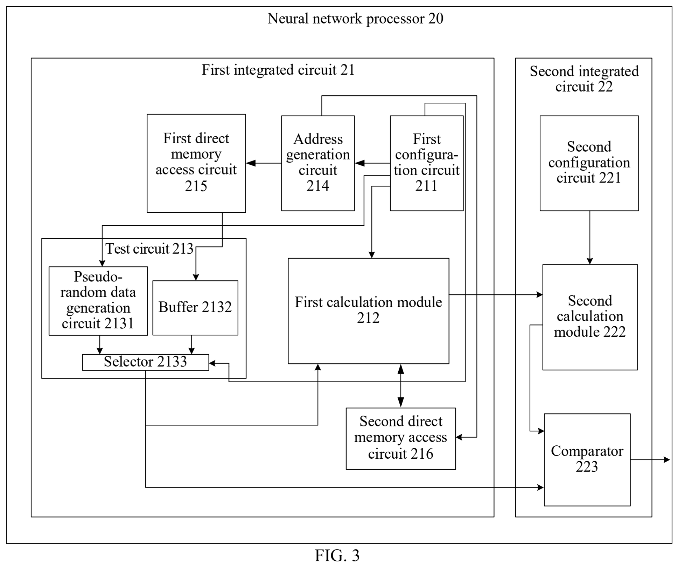

On the basis of the embodiments shown in FIG. 2, an embodiment of this disclosure provides another neural network processor. As shown in FIG. 3, in the neural network processor 20, the test circuit 213 includes a pseudo-random data generation circuit 2131, a buffer 2132, and a selector 2133. The first integrated circuit 21 further includes an address generation circuit 214, a first direct memory access circuit 215, and a second direct memory access circuit 216. The second integrated circuit 22 further includes a second configuration circuit 221.

In some embodiments of this disclosure, the selector 2133 may be a multiple-to-one data selector. The first direct memory access circuit 215 may be used for data reading, and the second direct memory access circuit 216 may be used for data writing. A depth of the buffer 2132 may be determined based on quantities of system cycles required for data processing by the first calculation module 212 and the second calculation module 222. In some examples, if the quantity of the system cycles required for data processing by the first calculation module 212 is n and the quantity of the system cycles required for data processing by the second calculation module 222 is m, the depth of the buffer 2132 needs to be greater than or equal to m+n.

A test enable terminal of the first configuration circuit 211 is coupled to a test enable terminal of the address generation circuit 214; an address configuration terminal of the first configuration circuit 211 is coupled to an address configuration terminal of the address generation circuit 214; a selection control end of the first configuration circuit 211 is coupled to a selection control end of the selector 2133; and an algorithm configuration terminal of the first configuration circuit 211 is coupled to an algorithm configuration terminal of the first calculation module 212.

An address output terminal of the address generation circuit 214 is coupled to a read address input terminal of the first direct memory access circuit 215 and a write address input terminal of the second direct memory access circuit 216. A read data output terminal of the first direct memory access circuit 215 is coupled to an input terminal of the buffer 2132. An output terminal of the buffer 2132 is coupled to a first input terminal of the selector 2133.

A test enable terminal of the pseudo-random data generation circuit 2131 is coupled to the test enable terminal of the test circuit 213, and a data output terminal of the pseudo-random data generation circuit 2131 is coupled to a second input terminal of the selector 2133. An output terminal of the selector 2133 is coupled to the data input terminal of the first calculation module 212.

An algorithm configuration terminal of the second configuration circuit 221 is coupled to an algorithm configuration terminal of the second calculation module 222.

### Exemplary method

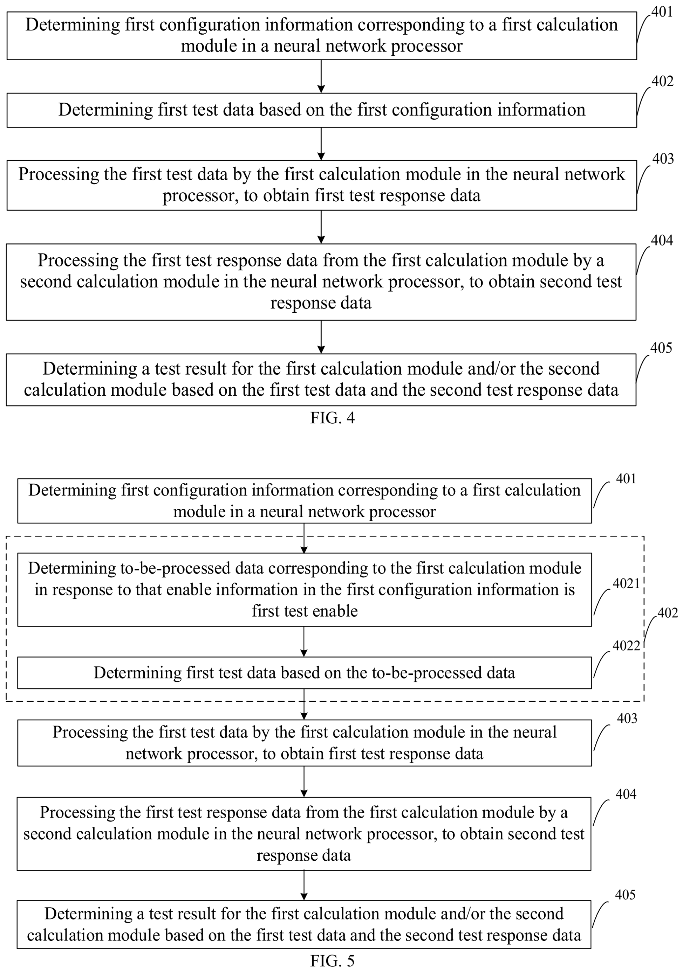

FIG. 4 is a schematic flowchart of a testing method for a neural network processor according to an exemplary embodiment of this disclosure. The testing method for a neural network processor may be applied to the neural network processor 20 shown in FIG. 2 and FIG. 3. As shown in FIG. 4, the testing method for a neural network processor may include the following steps 401 to 405.

Step 401: Determining first configuration information corresponding to a first calculation module in the neural network processor.

The first configuration information is used to configure a testing mode for the first calculation module.

For example, the testing mode of the first calculation module may include a first testing mode for testing (corresponding to a first test) through actual to-be-processed data (data input to the first calculation module when the neural network processor is working normally) and a second testing mode for testing (corresponding to a second test) through pseudo-random test data.

For example, the first configuration information may be control information for configuring the neural network processor to test the first calculation module in either the first testing mode or the second testing mode, and may be generated based on a first test configuration instruction sent from an operating system (a top layer). In some examples, different testing modes of the first calculation module may correspond to different first configuration information. For example, if the testing mode of the first calculation module is the first testing mode, the first configuration information includes enable information for enabling the first test, address information corresponding to the first calculation module, and a data selection signal for controlling a selector. If the testing mode of the first calculation module is the second testing mode, the first configuration information may include enable information and a data selection signal.

Referring to FIG. 2, the first configuration circuit 211 in the neural network processor 20 may receive the first test configuration instruction corresponding to the first calculation module 212 that is sent from the operating system, generate the first configuration information based on the test configuration instruction, and send the first configuration information to the test circuit 213.

Step 402: Determining first test data based on the first configuration information.

For example, the first test data may be data input to the first calculation module for testing the first calculation module. In some examples, the first test data may be pseudo-random test data, or to-be-processed data that is actually input into the first calculation module. A specific implementation of the first test data is not limited in this embodiment of this disclosure.

In some examples, if the first configuration information is configuration information corresponding to the first testing mode, the to-be-processed data that is actually input into the first calculation module is determined as the first test data; and if the first configuration information is configuration information corresponding to the second testing mode, the pseudo-random test data is determined as the first test data.

For example, referring to FIG. 2, the test circuit 213 may receive the first configuration information, generate the first test data in response to the first configuration information, and send the first test data to the first input terminal of the comparator 223 and the data input terminal of the first calculation module 212 through an output terminal of the test circuit 213.

Step 403: Processing the first test data by the first calculation module in the neural network processor, to obtain first test response data.

For example, the first test response data includes a first calculation result corresponding to the first test data. In some examples, if the first test data is the to-be-processed data, the first test response data includes a first calculation result corresponding to the to-be-processed data; and if the first test data is the pseudo-random test data, the first test response data includes a first calculation result corresponding to the pseudo-random test data.

For example, referring to FIG. 2, the first calculation module 212 may calculate the first test data based on a first algorithm corresponding to the first calculation module 212 to obtain the first test response data, and send the first test response data to the data input terminal of the second calculation module 222.

In some examples, referring to FIG. 3, the first configuration circuit 211 may also generate first algorithm information corresponding to the first calculation module 212 in response to the first test configuration instruction, and send the first algorithm information to the first calculation module 212. Further, the first calculation module 212 may first determine the first algorithm based on the first algorithm information, and then calculate the first test data based on the first algorithm.

Step 404: Processing the first test response data from the first calculation module by a second calculation module in the neural network processor, to obtain second test response data.

An algorithm corresponding to the second calculation module is inverse to that corresponding to the first calculation module.

For example, when the algorithm corresponding to the first calculation module is a compression algorithm, the algorithm corresponding to the second calculation module is a decompression algorithm that is inverse to the compression algorithm. When the algorithm corresponding to the first calculation module is an encoding algorithm, the algorithm corresponding to the second calculation module is a decoding algorithm that is inverse to the encoding algorithm. Specific algorithms corresponding to the first calculation module and the second calculation module are not limited in this embodiment of this disclosure.

For example, if the first test response data is the first calculation result, the second test response data is a second calculation result.

For example, referring to FIG. 2, the second calculation module 222 may calculate the first test response data according to a corresponding second algorithm that is determined based on second algorithm information corresponding to the second calculation module 222, to obtain the second test response data; and send the second test response data to the second input terminal of the comparator 223.

In some examples, referring to FIG. 3, the second configuration circuit may also receive the second test configuration instruction, generate the second algorithm information corresponding to the second calculation module 222 in response to the second test configuration instruction, and send the second algorithm information to the second calculation module 222. Further, the second calculation module 222 may first determine the second algorithm based on the second algorithm information, and then calculate the first test response data based on the second algorithm.

Step 405: Determining a test result for the first calculation module and/or the second calculation module based on the first test data and the second test response data.

For example, the test result may include test passed and test failed. The test passed may indicate that internal logic of the calculation module is correct, and the test failed may indicate that there is an abnormality in the internal logic of the calculation module.

For example, referring to FIG. 2, the comparator 223 may compare consistency between the first test data and the second test response data, and determine the test result for the first calculation module and/or the second calculation module based on a comparison result.

In this embodiment of this disclosure, because the algorithm corresponding to the first calculation module is inverse to that corresponding to the second calculation module, when the first test response data is obtained by processing the first test data by the first calculation module and the second test response data is obtained by processing the first test response data by the second calculation module, if the first calculation module and the second calculation module are normal, the second test response data output by the second calculation module is consistent with the first test data; and if logic of the first calculation module and/or the second calculation module is abnormal, the second test response data output by the second calculation module is inconsistent with the first test data. Therefore, the test result of the first calculation module and/or the second calculation module can be accurately determined based on the first test data and the second test response data, thereby implementing testing for different calculation modules. In this way, an applicable scope of a TEST PATTERN scheme is expanded, and testing efficiency is improved.

As shown in FIG. 5, on the basis of the embodiment shown in FIG. 4, step 402 may include the following steps 4021 and 4022.

Step 4021: Determining to-be-processed data corresponding to the first calculation module in response to that enable information in the first configuration information is first test enable.

For example, the enable information refers to information used to enable the first test or the second test for the first calculation module. A bit width of the enable information may be 2 bits. To be specific, the enable information may include a first enable bit and a second enable bit. In some examples, the first enable bit and the second enable bit may be used to enable different circuits, and different statuses of the first enable bit and the second enable bit may correspond to enabling of different tests to be performed on the first calculation module. For example, referring to FIG. 3, the first enable bit may be used to enable the test circuit 213, and the second enable bit may be used to enable the pseudo-random data generation circuit 2131 in the test circuit 213. Moreover, when the first enable bit is in an enable state and the second enable bit is in a disable state, the first test for the first calculation module may be enabled. When both the first enable bit and the second enable bit are in the enable state, the second test for the first calculation module may be enabled.

For example, the enable state may be represented by using first level (such as high level "1"), and the disable state may be represented by using second level (such as low level "0"). Alternatively, the enable state may be represented by using the second level, and the disable state may be represented by the first level. A level status of the enable state is not limited in this embodiment of this disclosure. Exemplary description is made in this embodiment of this disclosure by using an example in which the first level represents the enable state and the second level represents the disable state.

For example, the first test enable may include enable information corresponding to the first testing mode. Taking a bit width of 2 bits for the enable information as an example, in some examples, the first test enable may include "10" or "01".

For example, referring to FIG. 2, in response to that the enable information is the first test enable, the test circuit 213 may obtain the to-be-processed data corresponding to the first calculation module.

Step 4022: Determining the first test data based on the to-be-processed data.

For example, referring to FIG. 2, the test circuit 213 may determine the to-be-processed data as the first test data.

In this embodiment of this disclosure, when the first test enable indicates enable of the first test for the first calculation module, in response to that the enable information in the first configuration information is the first test enable, the to-be processed data corresponding to the first calculation module in actual operation can be determined, and the first test data corresponding to an actual operating status of the first calculation module can be determined based on the to-be processed data. Therefore, based on the first test data, the first calculation module can be tested while working, which not only improves testing efficiency but also improves testing accuracy.

In some examples, the first configuration information may also include address information.

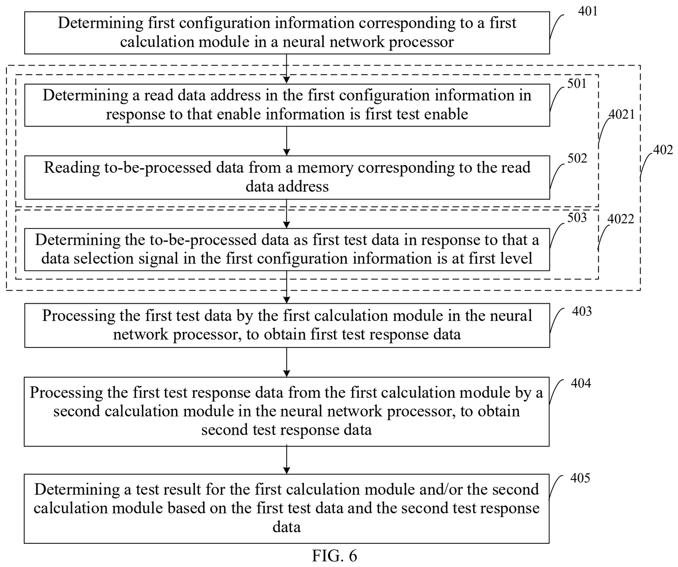

As shown in FIG. 6, on the basis of the embodiment shown in FIG. 5, step 4021 may include the following steps 501 and 502.

Step 501: Determining a read data address in the first configuration information in response to that the enable information is the first test enable.

For example, referring to FIG. 3, the first configuration circuit 211 may send the enable information to the test circuit 213, and simultaneously send the enable information and the address information to the address generation circuit 214. In response to that the enable information is the first test enable, the address generation circuit 214 generates a read data address corresponding to the first calculation module 212 and a write data address corresponding to the first calculation module 212 based on the address information, sends the read data address to an address input terminal of the first direct memory access circuit 215 through a read data address output terminal, and sends the write data address to an address input terminal of the second direct memory access circuit 216 through a write data address output terminal.

Step 502: Reading the to-be-processed data from a memory corresponding to the read data address.

For example, referring to FIG. 3, the first direct memory access circuit 215 may read the to-be-processed data from a corresponding direct memory access memory based on the read data address, and send the to-be-processed data to the input terminal of the buffer 2132.

In this embodiment of this disclosure, the read data address in the first configuration information is determined in response to that the enable information is the first test enable. Therefore, the to-be-processed data can be accurately read from the memory corresponding to the read data address.

In this embodiment of this disclosure, after reading the to-be-processed data, the first direct memory access circuit 215 may send the to-be-processed data to the input terminal of the buffer 2132. The buffer 2132 receives the to-be-processed data, and sends the to-be-processed data to the second input terminal of the selector 2133. Meanwhile, in response to that the enable information is the first test enable, the test circuit 213 may enable the buffer 2132 and the selector 2133 in the test circuit 213, and disable the pseudo-random data generation circuit 2131 (the pseudo-random data generation circuit 2131 does not work, and stops generating and sending the pseudo-random test data to the first input terminal of the selector 2133).

In some examples, the first configuration information may also include the data selection signal. Referring to FIG. 3, the first configuration circuit 211 is further configured to send the first configuration information to the selector 2133.

Referring to FIG. 6 again, on the basis of the embodiment shown in FIG. 5, step 4022 may include the following step 503.

Step 503: Determining the to-be-processed data as the first test data in response to that a data selection signal in the first configuration information is at first level.

For example, referring to FIG. 3, in response to that the data selection signal is at the first level, the selector 2133 may select the to-be-processed data as the first test data, and send the first test data to the first calculation module 212 and the first input terminal of the comparator 223.

In this embodiment of this disclosure, the to-be-processed data is input as the first test data into the first calculation module in response to that the data selection signal in the first configuration information is at the first level, so that the first calculation module can be tested while working. In this case, testing efficiency is improved.

For example, referring to FIG. 3, after the to-be-processed data is input as the first test data into the first calculation module 212 and the first test response data is obtained by processing the first test data by the first calculation module 212, the second direct memory access circuit 216 may write the first test response data into a direct memory access memory corresponding to the write data address.

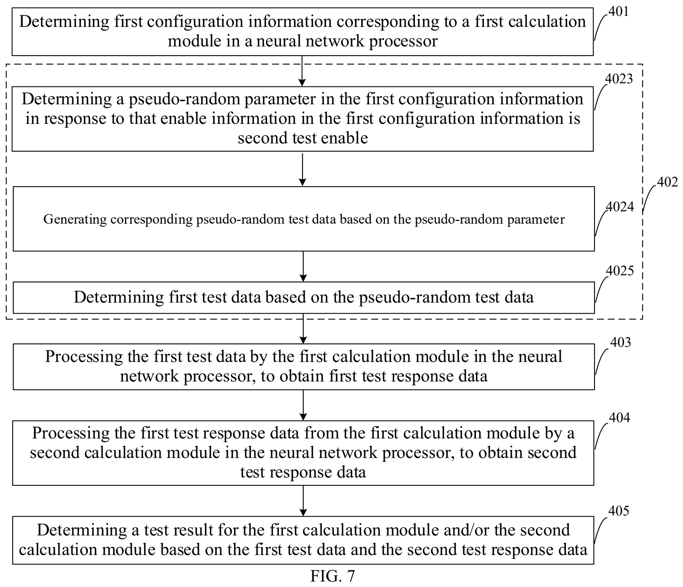

As shown in FIG. 7, on the basis of the embodiment shown in FIG. 4, step 402 may include the following steps 4023 to 4025.

Step 4023: Determining a pseudo-random parameter in the first configuration information in response to that enable information in the first configuration information is second test enable.

For example, the second test enable may include enable information corresponding to the second testing mode. Taking a bit width of 2 bits for the enable information as an example, in some examples, the second test enable may include "11".

For example, the pseudo-random parameter may be used to indicate a type of the generated pseudo-random test data (different types of the pseudo-random test data may be used to implement different functional detections). In some examples, the pseudo-random parameter may include a data type and a data length.

In some examples, as shown in FIG. 3, the first configuration circuit 211 may generate the pseudo-random parameter in response to the test configuration instruction, and send the pseudo-random parameter to the pseudo-random data generation circuit 2131 in the test circuit 213.

In some other examples, as shown in FIG. 3, the first configuration information may include random test data, and the first configuration circuit 211 may send the pseudo-random parameter to the pseudo-random data generation circuit 2131 while sending the enable information to the test circuit 213.

Step 4024: Generating corresponding random test data based on the pseudo-random parameter.

For example, referring to FIG. 3, in response to that the enable information is the second test enable, the test circuit 213 may enable the pseudo-random data generation circuit 2131, the buffer 2132, and the selector 2133 in the test circuit 213. The pseudo-random data generation circuit 2131 may generate the corresponding pseudo-random test data in response to the pseudo-random parameter, and send the pseudo-random test data to the first input terminal of the selector 2133.

For example, referring to FIG. 3, in response to that the enable information is the second test enable, the address generation circuit 214 may stop working (stop sending the read data address to the first direct memory access circuit 215, and stop sending the write data address to the second direct memory access circuit 216). The first direct memory access circuit 215 stops working (stops sending the to-be-processed data to the buffer 2132), and the second direct memory access circuit 216 also stops working. The buffer 2132 does not receive the to-be-processed data, and sends null data to the second input terminal of the selector 2133.

Step 4025: Determining the first test data based on the random test data.

In this embodiment of this disclosure, the random test data is determined as the first test data in response to that the data selection signal in the first configuration information is at second level.

For example, referring to FIG. 3, in response to that the data selection signal is at the second level, the selector 2133 may determine the pseudo-random test data as the first test data, and send the first test data to the first calculation module 212 and the first input terminal of the comparator 223.

In this embodiment of this disclosure, the random test data can be used as the first test data in response to that the data selection signal in the first configuration information is at the second level, so as to implement a second test for the first calculation module.

In this embodiment of this disclosure, the pseudo-random parameter in the first configuration information is determined in response to that the enable information in the first configuration information is the second test enable. In this way, when the pseudo-random parameter can accurately represent a target type of the random test data, random test data of the target type can be accurately generated based on the pseudo-random parameter. Further, the first test data determined based on the random test data can be used to test a target function of the first calculation module.

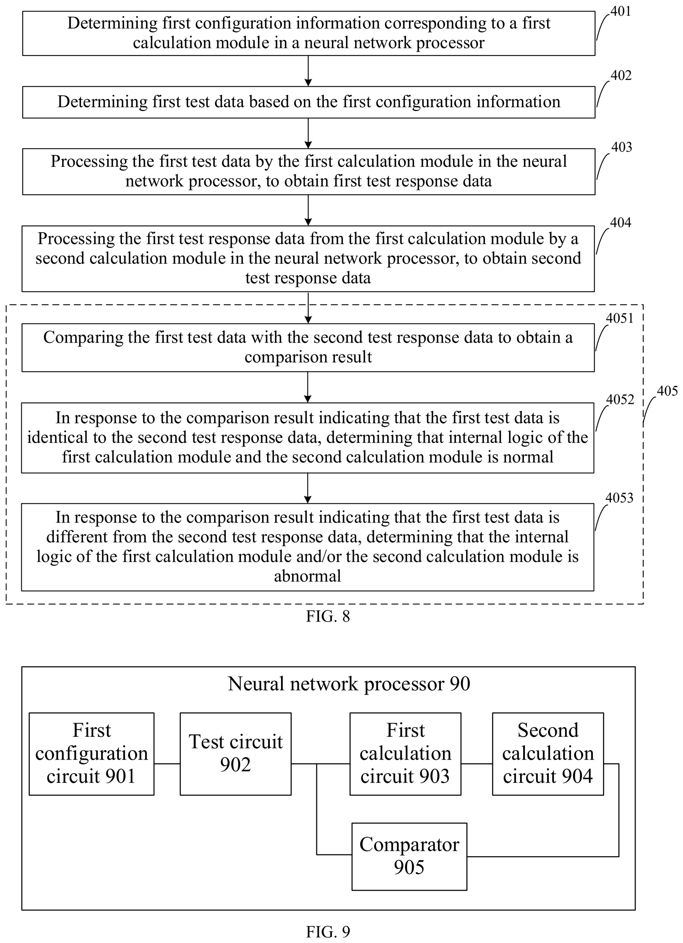

As shown in FIG. 8, on the basis of the embodiment shown in FIG. 4, step 405 may include the following steps 4051 to 4053.

Step 4051: Comparing the first test data with the second test response data to obtain a comparison result.

For example, the comparison result may include that the first test data is consistent with the second test response data and the first test data is different from the second test response data. In some examples, the first level may be used to indicate that the first test data is consistent with the second test response data, and the second level may be used to indicate that the first test data is different from the second test response data.

For example, referring to FIG. 2 or FIG. 3, the comparator 223 may compare the first test data with the second test response data to obtain the comparison result.

Step 4052: In response to the comparison result indicating that the first test data is identical to the second test response data, determining that internal logic of the first calculation module and the second calculation module is normal.

For example, if the comparison result is the first level, it is determined that the logic of the first calculation module and the second calculation module is normal.

Step 4053: In response to the comparison result indicating that the first test data is different from the second test response data, determining that the internal logic of the first calculation module and/or the second calculation module is abnormal.

For example, if the comparison result is the second level, it is determined that the logic of the first calculation module and/or the second calculation module is abnormal.

In this embodiment of this disclosure, because the algorithm corresponding to the first calculation module is inverse to that corresponding to the second calculation module, by comparing the first test data input to the first calculation module with the second test response data, it can be accurately determined that the internal logic of the first calculation module and the second calculation module is normal when the first test data is identical to the second test response data, and it can be accurately determined that the internal logic of the first calculation module and/or the second calculation module is abnormal when the first test data is different from the second test response data. Thus, efficiency and accuracy of testing can be improved.

### Exemplary device

On the basis of the foregoing embodiment, an embodiment of this disclosure provides a neural network processor. FIG. 9 is a schematic diagram of a structure of yet another neural network processor according to an exemplary embodiment of this disclosure. As shown in FIG. 9, a neural network processor 90 may include a first configuration circuit 901, a test circuit 902, a first calculation module 903, a second calculation module 904, and a comparator 905.

The first configuration circuit 901 is coupled to the test circuit 902, and may be configured to receive a test configuration instruction, generate first configuration information corresponding to the first calculation module in response to the test configuration instruction, and send the first configuration information to the test circuit 902.

The test circuit 902 is coupled to the first calculation module 903 and the comparator 905, and may be configured to determine first test data based on the first configuration information, and send the first test data to the first calculation module 903 and the comparator 905.

The first calculation module 903 is coupled to the second calculation module 904, and may be configured to process the first test data, and send obtained first test response data to the second calculation module 904.

The second calculation module 904 is coupled to the comparator 905, and may be configured to process the first test response data and send obtained second test response data to the comparator 905. An algorithm corresponding to the second calculation module 904 is inverse to that corresponding to the first calculation module 903.

The comparator 905 may be configured to determine a test result for the first calculation module and/or the second calculation module based on the first test data and the second test response data.

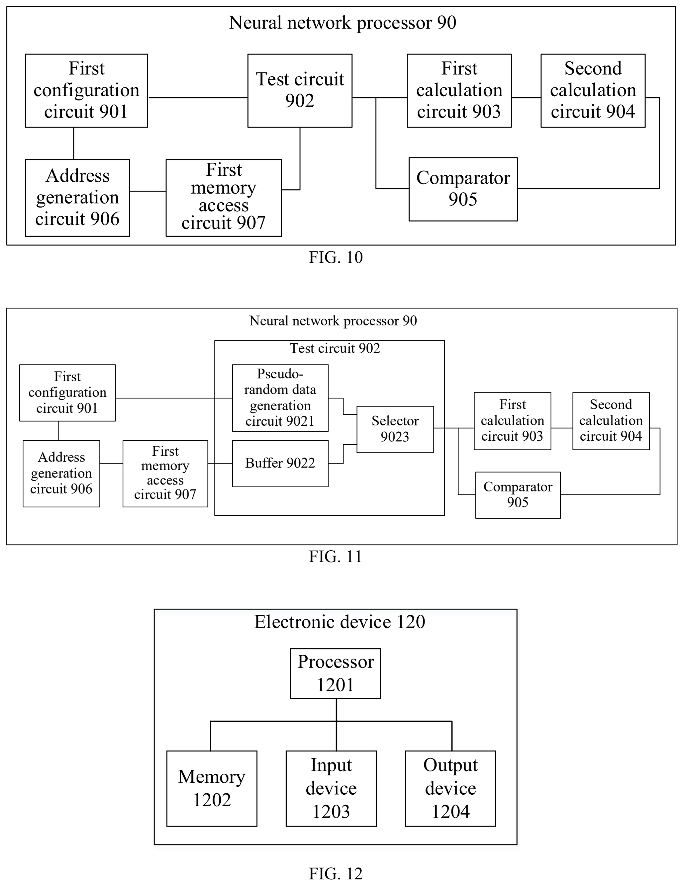

As shown in FIG. 10, on the basis of the embodiment shown in FIG. 9, the neural network processor 90 may further include an address generation circuit 906 and a first memory access circuit 907.

The first configuration circuit 901 is coupled to the address generation circuit 906, and may be configured to send the first configuration information to the address generation circuit 906.

The address generation circuit 906 is coupled to the first memory access circuit 907, and may be configured to determine a read data address in the first configuration information in response to that enable information in the first configuration information is first test enable, and send the read data address to the first memory access circuit 907.

The first memory access circuit 907 is coupled to the test circuit 902, and may be configured to read to-be-processed data corresponding to the first calculation module 903 from a memory corresponding to the read data address, and send the to-be-processed data to the test circuit 902.

As shown in FIG. 11, on the basis of the embodiment shown in FIG. 10, the test circuit 902 may include a pseudo-random data generation circuit 9021, a buffer 9022, and a selector 9023.

The pseudo-random data generation circuit 9021 is coupled to the first configuration circuit 901 and a first input terminal of the selector 9023, and may be configured to stop sending random test data to the selector 9023 in response to that the enable information in the first configuration information is the first test enable.

The buffer 9022 is coupled to the first memory access circuit 907 and a second input terminal of the selector 9023, and is configured to receive and cache the to-be-processed data.

The selector 9023 is coupled to the first configuration circuit 901, and is configured to select to send the to-be-processed data to the first calculation module 903 and the comparator 905 in response to that a data selection signal in the first configuration information is at first level.

As shown in FIG. 10, the address generation circuit 906 may be configured to stop sending the read data address to the first memory access circuit 907 in response to that the enable information in the first configuration information is second test enable.

The first memory access circuit 907 is configured to stop determining the to-be-processed data corresponding to the first calculation module 903 and stop sending the to-be-processed data to the test circuit 902 in response to that the read data address is not obtained.

As shown in FIG. 11, on the basis of the embodiment shown in FIG. 10, the test circuit 902 may include a pseudo-random data generation circuit 9021, a buffer 9022, and a selector 9023.

The pseudo-random data generation circuit 9021 is coupled to the first configuration circuit 901 and a first input terminal of the selector 9023, and may be configured to determine a pseudo-random parameter in the first configuration information in response to that the enable information in the first configuration information is the second test enable, and generate random test data based on the pseudo-random parameter.

The buffer 9022 is coupled to the first memory access circuit 907 and a second input terminal of the selector 9023, and may be configured to determine that the to-be-processed data is not buffered in response to that the to-be-processed data is not obtained.

The selector 9023 is coupled to the first configuration circuit, and may be configured to select to send the random test data to the first calculation module 903 and the comparator 9023 in response to that a data selection signal in the first configuration information is at second level.

### Exemplary electronic device

FIG. 12 is a schematic diagram of a structure of an electronic device according to an exemplary embodiment of this disclosure. As shown in FIG. 12, an electronic device 120 includes one or more processors 1201 and a memory 1202.

The processor 1201 may be a central processing unit (CPU) or another form of processing unit having a data processing capability and/or an instruction execution capability, and may control other components in the electronic device 120 to implement desired functions.

The memory 1202 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1201 may execute the program instruction to implement the testing method for a neural network processor according to various embodiments of this disclosure that are described above and/or other desired functions.

In an example, the electronic device 120 may further include an input device 1203 and an output device 1204. These components are connected to each other through a bus system and/or another form of connection mechanism (not shown).

Certainly, for simplicity, FIG. 12 shows only some of components in the electronic device 120 that are related to this disclosure, and components such as a bus and an input/output interface are omitted. In addition, according to specific application situations, the electronic device 120 may further include any other appropriate components.

### Exemplary computer program product and computer readable storage medium

In addition to the foregoing method and device, the embodiments of this disclosure may also relate to a computer program product, which includes computer program instructions. When the computer program instructions are run by a processor, the processor is enabled to perform the steps, of the testing method for a neural network processor according to the embodiments of this disclosure, that are described in the "Exemplary method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the testing method for a neural network processor according to the embodiments of this disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A testing method for a neural network processor, comprising:
determining first configuration information corresponding to a first calculation module in the neural network processor, wherein the first configuration information is used to configure a testing mode for the first calculation module;
determining first test data based on the first configuration information;
processing the first test data by the first calculation module in the neural network processor, to obtain first test response data;
processing the first test response data from the first calculation module by a second calculation module in the neural network processor, to obtain second test response data, wherein an algorithm corresponding to the second calculation module is inverse to that corresponding to the first calculation module; and
determining a test result for the first calculation module and/or the second calculation module based on the first test data and the second test response data.

2. The method according to claim 1, wherein the determining first test data based on the first configuration information comprises:
determining to-be-processed data corresponding to the first calculation module in response to that enable information in the first configuration information is first test enable; and
determining the first test data based on the to-be-processed data.

3. The method according to claim 2, wherein the determining to-be-processed data corresponding to the first calculation module in response to that enable information in the first configuration information is first test enable comprises:
determining a read data address in the first configuration information in response to that the enable information is the first test enable; and
reading the to-be-processed data from a memory corresponding to the read data address.

4. The method according to claim 2, wherein the determining the first test data based on the to-be-processed data comprises:
determining the to-be-processed data as the first test data in response to that a data selection signal in the first configuration information is at first level.

5. The method according to claim 1, wherein the determining first test data based on the first configuration information comprises:
determining a pseudo-random parameter in the first configuration information in response to that enable information in the first configuration information is second test enable;
generating corresponding random test data based on the pseudo-random parameter; and
determining the first test data based on the random test data.

6. The method according to claim 5, wherein the determining the first test data based on the random test data comprises:
determining the random test data as the first test data in response to that a data selection signal in the first configuration information is at second level.

7. The method according to any one of claims 1 to 6, wherein the determining a test result for the first calculation module and/or the second calculation module based on the first test data and the second test response comprises:
comparing the first test data with the second test response data to obtain a comparison result;
in response to the comparison result indicating that the first test data is identical to the second test response data, determining that logic of the first calculation module and the second calculation module is normal; and
in response to the comparison result indicating that the first test data is different from the second test response data, determining that the logic of the first calculation module and/or the second calculation module is abnormal.

8. A neural network processor, comprising:
a first configuration circuit coupled to a test circuit, being configured to receive a test configuration instruction, generate first configuration information corresponding to a first calculation module in response to the test configuration instruction, and send the first configuration information to the test circuit;
the test circuit coupled to the first calculation module and a comparator, being configured to determine first test data based on the first configuration information, and send the first test data to the first calculation module and the comparator;
the first calculation module coupled to a second calculation module, being configured to process the first test data, and send obtained first test response data to the second calculation module;
the second calculation module coupled to the comparator, being configured to process the first test response data and send obtained second test response data to the comparator, wherein an algorithm corresponding to the second calculation module is inverse to that corresponding to the first calculation module; and
the comparator, configured to determine a test result for the first calculation module and/or the second calculation module based on the first test data and the second test response data.

9. The neural network processor according to claim 8, wherein the neural network processor further comprises an address generation circuit and a first memory access circuit;
the first configuration circuit is coupled to the address generation circuit, and is configured to send the first configuration information to the address generation circuit;
the address generation circuit is coupled to the first memory access circuit, and is configured to determine a read data address in the first configuration information in response to that enable information in the first configuration information is first test enable, and send the read data address to the first memory access circuit; and
the first memory access circuit is coupled to the test circuit, and is configured to read to-be-processed data corresponding to the first calculation module from a memory corresponding to the read data address, and send the to-be-processed data to the test circuit.

10. The neural network processor according to claim 9, wherein the test circuit comprises:
a pseudo-random data generation circuit, which is coupled to the first configuration circuit and a first input terminal of a selector, and is configured to stop sending random test data to the selector in response to that the enable information in the first configuration information is the first test enable;
a buffer, which is coupled to the memory access circuit and a second input terminal of the selector, and is configured to receive and buffer the to-be-processed data; and
the selector, which is coupled to the first configuration circuit, and is configured to select to send the to-be-processed data to the first calculation module and the comparator in response to that a data selection signal in the first configuration information is at first level.

11. The neural network processor according to claim 9, wherein
the address generation circuit is configured to stop sending the read data address to the memory access circuit in response to that the enable information in the first configuration information is second test enable; and
the memory access circuit is configured to stop determining the to-be-processed data corresponding to the first calculation module and stop sending the to-be-processed data to the test circuit in response to that the read data address is not obtained.

12. The neural network processor according to claim 11, wherein the test circuit comprises:
a pseudo-random data generation circuit, which is coupled to the first configuration circuit and a first input terminal of a selector, and is configured to determine a pseudo-random parameter in the first configuration information in response to that the enable information in the first configuration information is the second test enable, and generate random test data based on the pseudo-random parameter;
a buffer, which is coupled to the memory access circuit and a second input terminal of the selector, and is configured to determine that the to-be-processed data is not cached in response to that the to-be-processed data is not obtained; and
the selector, which is coupled to the first configuration circuit, and is configured to select to send the random test data to the first calculation module and the comparator in response to that a data selection signal in the first configuration information is at second level.

13. A computer readable storage medium, wherein the storage medium stores a computer program, and the computer program is used for implementing the testing method for a neural network processor according to any one of claims 1 to 7.

14. An electronic device, wherein the electronic device comprises:
a processor; and
a memory, configured to store processor-executable instructions, wherein
the processor is configured to read the executable instructions from the memory, and execute the instructions to implement the testing method for a neural network processor according to any one of claims 1 to 7.
